# EUROPEAN PATENT APPLICATION

(11) **EP 4 836 032 A1**
(43) Date of publication of application: **04.11.2026**
(21) Application number: 24911886.0
(22) Date of filing: 26.09.2024
(51) Int. Cl.: H01M 8/04, B60L 50/71

(54) **WORK VEHICLE**

(30) Priority: 26.12.2023 JP 2023219066
(71) Applicant: KUBOTA CORPORATION, Osaka-shi, Osaka 530-0011 (JP)
(72) Inventor: YASUDA, Soshi, Sakai-shi, Osaka 590-0908 (JP); HORIIKE, Kohei, Sakai-shi, Osaka 590-0908 (JP)
(74) Representative: Cabinet Beau de Loménie
(86) International application number: PCT/JP2024/034423
(87) International publication number: WO 2025/141992

(57) **Abstract**

A work vehicle 1 according to the present disclosure includes: an FC module 24; a vehicle body 11 on which the FC module 24 is mounted; and a discharge pipe 50 having a discharge port 56 for discharging drainage water from the FC module 24 to the outside. The discharge pipe 50 includes a standing pipe 52 that guides the drainage water upward and discharges the guided drainage water from the discharge port 56.

## Description

### TECHNICAL FIELD

The present disclosure relates to a work vehicle.

### BACKGROUND ART

Patent Literature 1 discloses a work vehicle including a motor and a fuel cell using hydrogen as a fuel. A fuel cell generates electric power by an electrochemical reaction between hydrogen and air (oxygen). The generated electric power is used as electric power for driving the motor. The work vehicle travels using a rotational force of the motor as a driving force.

The present application claims priority based on Japanese Patent Application No. 2023-219066 filed on December 26, 2023, the entire contents of which are incorporated herein by reference.

### CITATION LIST

### [PATENT LITERATURE]

PATENT LITERATURE 1: Japanese Laid-Open Patent Publication No. 2023-13186

### SUMMARY OF THE INVENTION

A work vehicle according to the present disclosure includes a fuel cell, a vehicle body on which the fuel cell is mounted, and a discharge pipe having a discharge port for discharging drainage water from the fuel cell to an outside. The discharge pipe includes a standing pipe that guides the drainage water upward and discharges the guided drainage water from the discharge port.

### BRIEF DESCRIPTION OF DRAWINGS

[FIG. 1] FIG. 1 is a right side view illustrating an entire work vehicle according to Embodiment 1.
[FIG. 2] FIG. 2 is a front view of the work vehicle.
[FIG. 3] FIG. 3 is a perspective view illustrating a skeleton structure of the work vehicle.
[FIG. 4] FIG. 4 is a perspective view illustrating a discharge pipe.
[FIG. 5] FIG. 5 is an enlarged cross-sectional view of a portion of a lower pipe of the discharge pipe.
[FIG. 6] FIG. 6 is a right side view illustrating an entire work vehicle according to Embodiment 2.
[FIG. 7] FIG. 7 is a rear view of a work vehicle according to Embodiment 3.
[FIG. 8A] FIG. 8A is a partial cross-sectional view of a discharge pipe according to Embodiment 4.
[FIG. 8B] FIG. 8B is a partial cross-sectional view of a discharge pipe according to a modified example of Embodiment 4.
[FIG. 9A] FIG. 9A is a partial cross-sectional view of a discharge pipe according to Embodiment 5.
[FIG. 9B] FIG. 9B is a partial cross-sectional view of a discharge pipe according to a modified example of Embodiment 5.

### DETAILED DESCRIPTION

### [PROBLEM TO BE SOLVED BY PRESENT DISCLOSURE]

Discharge (exhaust gas) discharged from the fuel cell contains water generated by an electrochemical reaction. Accordingly, when the discharge is discharged to the outside, the drainage water (water vapor) contained in the discharge may appear like white smoke.

For this reason, the water vapor appearing like white smoke may obstruct the view of an occupant of the work vehicle. Therefore, there is a demand for a technique capable of preventing poor visibility due to the water vapor from the exhaust gas.

### [EFFECTS OF PRESENT DISCLOSURE]

According to the present disclosure, it is possible to prevent poor visibility due to water vapor.

First, contents of embodiments will be listed and described.

### [OUTLINE OF EMBODIMENTS]

(1) A work vehicle according to the present disclosure includes a fuel cell, a vehicle body on which the fuel cell is mounted, and a discharge pipe having a discharge port for discharging drainage water from the fuel cell to an outside. The discharge pipe includes a standing pipe that guides the drainage water upward and discharges the guided drainage water from the discharge port.

According to the above configuration, since drainage water (water vapor) is guided upward by the standing pipe and is discharged from the discharge port, for example, if the standing pipe is provided in such a way that the discharge port is disposed above the eye level of an occupant of the work vehicle, even if the drainage water (water vapor) appears like white smoke from the discharge port, it is possible to inhibit the water vapor from obstructing the view of the occupant or fogging the cabin window, and thus possible to inhibit visibility from being lowered due to the water vapor.

(2) In the work vehicle of (1) above, the discharge pipe may further include an external pipe extending from the vehicle body to the outside and connected to the standing pipe.

In this case, since the standing pipe is disposed outside the vehicle body, for example, it is possible to inhibit water vapor discharged from the discharge port from entering a cabin of the work vehicle. As a result, it is possible to effectively inhibit visibility from being lowered due to water vapor.

(3) In the work vehicle of (1) or (2) above, when the standing pipe includes an upper pipe extending in the horizontal direction from an upper end or a middle portion thereof, the discharge port may be provided in the upper pipe.

In this case, the direction of drainage water (water vapor) discharged from the discharge port can be set to the horizontal direction, so that it is possible to direct the water vapor to a direction that does not affect the field of view.

(4) In the work vehicle of (3) above, the upper pipe preferably extends in a direction away from the vehicle body.

In this case, it is possible to direct water vapor to be discharged to a direction away from the vehicle body.

(5) In the work vehicle according to any one of (1) to (4) above, when the discharge pipe further includes an external discharge port that is provided in the standing pipe and discharges the drainage water to the outside separately from the discharge port, the external discharge port may be located below the discharge port.

The drainage water includes water vapor and water (liquid) in which the water vapor is cooled and condenses in the discharge pipe. Against this problem, since the present disclosure includes the external discharge port, water in the discharge pipe generated by condensation of water vapor can be discharged from the external discharge port, thus making it possible to inhibit water from being stored in the discharge pipe.

(6) In the work vehicle according to any one of (2) to (4) above, when the discharge pipe further includes an external discharge port that is provided in the external pipe and discharges the drainage water to the outside separately from the discharge port, the external discharge port may be located below the discharge port.

Also in this case, water in the discharge pipe generated by condensation of water vapor in the discharge pipe can be discharged from the external discharge port, thus making it possible to inhibit water from being stored in the discharge pipe.

(7) In the work vehicle according to any one of (1) to (6) above, when the discharge pipe further includes a lower pipe connected to the standing pipe, the lower pipe may include an external discharge port that discharges the drainage water to the outside separately from the discharge port.

Also in this case, water in the discharge pipe generated by condensation can be discharged from the external discharge port, thus making it possible to inhibit water from being stored in the discharge pipe.

Further, since the external discharge port is provided in the lower pipe, it is possible to guide water to be discharged downward while inhibiting the water to be discharged from being transmitted to the other portion of the discharge pipe.

(8) In the work vehicle according to any one of (2) to (4) above, when the discharge pipe further includes a lower pipe connected to the external pipe, the lower pipe may include an external discharge port that discharges the drainage water to the outside separately from the discharge port.

Also in this case, water in the discharge pipe generated by condensation can be discharged from the external discharge port, thus making it possible to inhibit water from being stored in the discharge pipe.

Further, since the external discharge port is provided in the lower pipe, it is possible to guide water to be discharged downward while inhibiting the water to be discharged from being transmitted to the other portion of the discharge pipe.

(9) In the work vehicle according to any one of (1) to (8) above, when the vehicle body includes a cabin surrounding a driver's seat behind the fuel cell and a hood covering the fuel cell, the standing pipe may be provided on the side of the hood.

In this case, since the standing pipe is provided on the side of the hood, even if water vapor appears like white smoke from the discharge port, it is possible to inhibit the water vapor from obstructing the view of the occupant or fogging the window of the cabin, and thus possible to inhibit visibility from being lowered due to the water vapor.

(10) In the work vehicle according to any one of (1) to (8) above, when the vehicle body includes a cabin surrounding a driver's seat behind the fuel cell, the standing pipe may be provided on the side of the cabin.

In this case, since the standing pipe is provided on the side of the cabin, even if water vapor appears like white smoke from the discharge port, it is possible to inhibit the water vapor from obstructing the view of the occupant or fogging the window of the cabin, and thus possible to inhibit visibility from being lowered due to the water vapor.

(11) In the work vehicle according to any one of (1) to (8) above, when the vehicle body includes a cabin surrounding a driver's seat behind the fuel cell, the standing pipe may be provided behind the cabin.

In this case, since the standing pipe is provided behind the cabin, even if water vapor appears like white smoke from the discharge port, it is possible to inhibit the water vapor from obstructing the view of the occupant or fogging the window of the cabin, and thus possible to inhibit visibility from being lowered due to the water vapor.

### [DETAILS OF EMBODIMENTS]

Hereinafter, preferred embodiments will be described with reference to the drawings.

Note that, at least some of the embodiments described below may be combined as appropriate.

### [Overall Configuration of Work Vehicle of Embodiment 1]

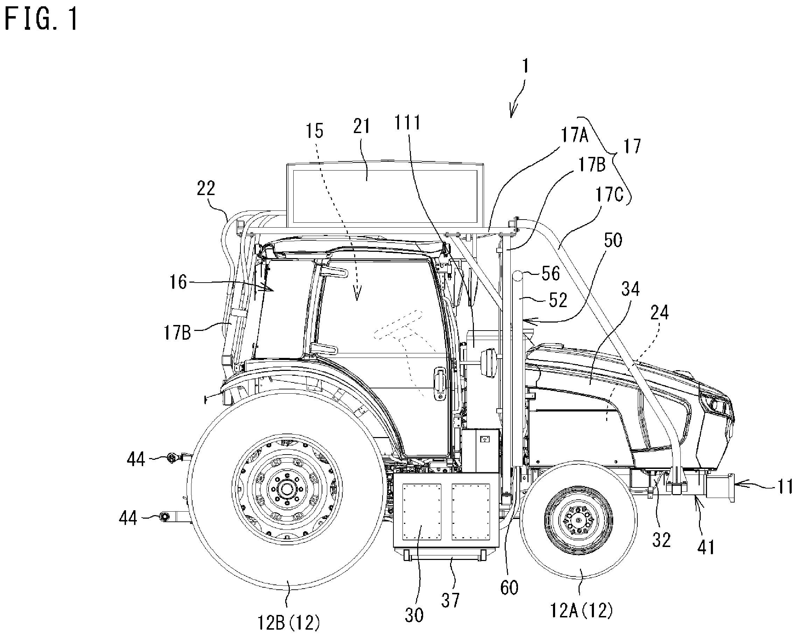

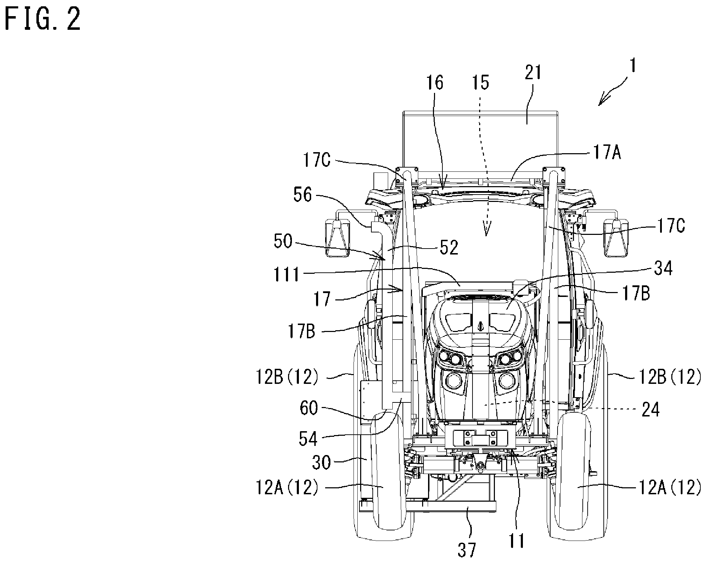

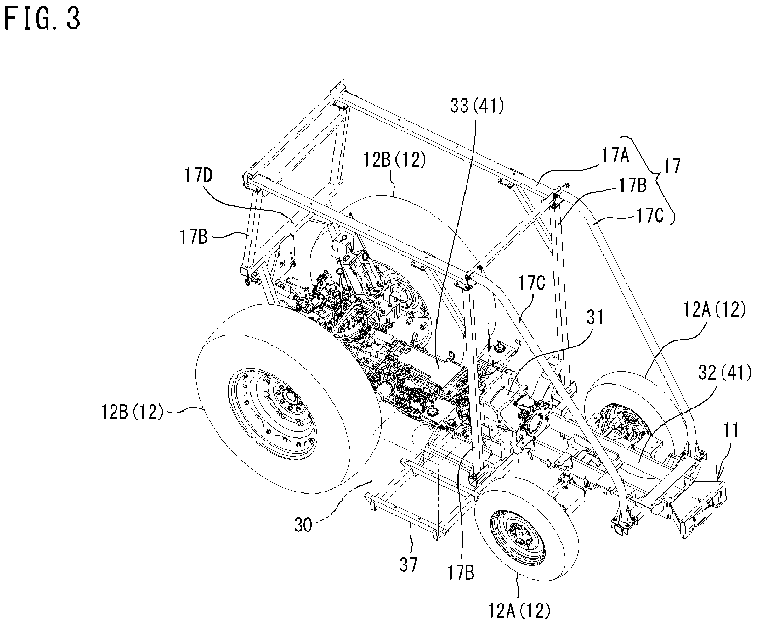

FIG. 1 is a right side view illustrating an entire work vehicle 1 according to Embodiment 1. FIG. 2 is a front view of the work vehicle 1. FIG. 3 is a perspective view illustrating a skeleton structure of the work vehicle 1.

As illustrated in FIG. 1 and FIG. 2, the work vehicle 1 is a vehicle used for farmwork, specifically, a tractor. However, the work vehicle 1 is not limited to a tractor, and may be a moving body such as an agricultural machine, a construction machine, or a utility vehicle.

The work vehicle 1 includes a vehicle body 11, a traveling device 12 that supports the vehicle body 11, and the like. The vehicle body 11 includes a chassis 41, a hood 34, a cover 111, a driver's seat 15, a cabin 16, a fender for a rear wheel 12B, and the like.

More specifically, in the chassis 41 of the vehicle body 11, the hood 34, the cover 111, and the driver's seat 15 (cabin 16) are arranged in order from the front portion to the rear portion thereof.

The work vehicle 1 further includes a tank unit 21, a fuel cell module (FC module) 24, a battery unit 30, and an electric motor 31(see FIG. 3, it is hereinafter also referred to as the "motor 31").

The work vehicle 1 includes the FC module 24 which is a fuel cell power generation system (FC power generation system). The work vehicle 1 travels using electric power generated by the FC power generation system as an energy source.

Note that, the FC power generation system of the present embodiment generates electric power by hydrogen. The FC power generation system may generate electric power by methane or carbon monoxide (CO).

The FC module 24 includes a fuel cell stack. The fuel cell stack (FC stack) has a stack structure in which multiple fuel cell cells (single cells) are stacked. The multiple single cells are connected in series so as to obtain a desired voltage. Hydrogen as fuel and air (oxygen) are supplied to the FC stack. The FC module 24 includes a compressor and a pump for supplying hydrogen and air to the FC stack. The FC stack generates electric power by an electrochemical reaction generated by hydrogen and air.

The FC module 24 is mounted in front of the driver's seat 15 in the chassis 41.

A first radiator (not illustrated) is mounted in front of the FC module 24 in the chassis 41. A second radiator (not illustrated) is mounted between the FC module 24 and the driver's seat 15 in the chassis 41.

The hood 34 is a cover that covers the first radiator and the FC module 24.

In addition, the second radiator is covered with the cover 111.

The tank unit 21 has multiple tanks for storing fuel therein. The fuel is liquid or gas, and is hydrogen, methane, carbon monoxide (CO), or the like. The fuel of the present embodiment is hydrogen. Each of the multiple tanks 13 stores hydrogen gas.

The work vehicle 1 includes a hydrogen gas pipe 22. The hydrogen gas is filled into the hydrogen tank of the tank unit 21 through a filling port (not illustrated) provided at an end of the pipe 22. Hydrogen in the hydrogen tank is supplied to the FC module 24 through the pipe 22.

The battery unit 30 is mounted on a side portion of the chassis 41 and below the cabin 16. The battery unit 30 stores the electric power output from the FC module 24.

The cabin 16 surrounds the driver's seat 15 located behind the FC module 24. The cabin 16 has front pillars, rear pillars, and a roof. The front pillars are arranged on the left and right on the front side of the driver's seat 15, and the rear pillars are arranged on the left and right on the rear side of the driver's seat 15. The cabin 16 has windows on a front surface, left and right side surfaces, and a rear surface.

The work vehicle 1 may have a canopy or a rollover protective structure (ROPS) instead of the cabin 16. When the work vehicle 1 has no cabin 16, the tank unit 21 is disposed above the driver's seat 15 by an installation frame 17 to be described later.

The traveling device 12 is provided on the chassis 41. The traveling device 12 includes a front wheel 12A and a rear wheel 12B. These are arranged symmetrically with respect to the vehicle body 11. One or both of the front wheel 12A and the rear wheel 12B are driven by a rotational force output from the motor 31.

The wheel (drive wheel) driven by the motor 31 may be a crawler (caterpillar).

The motor 31 is driven by electric power discharged from the battery unit 30 or electric power output from the FC module 24.

As a result, the work vehicle 1 travels using electric power generated by the FC module 24.

As illustrated in FIG. 3, the chassis 41 includes a front frame 32 and a transmission case 33.

The front frame 32 is made of a steel frame having a shape elongated in the front-rear direction. The transmission case 33 is connected to a rear portion of the front frame 32.

The installation frame 17 is connected to the chassis 41. The installation frame 17 is a frame for disposing the tank unit 21 above the cabin 16.

The installation frame 17 includes a ceiling frame 17A, multiple pillars 17B, and a pair of left and right reinforcing frames 17C. The ceiling frame 17A has a substantially rectangular shape longer in the front-rear direction than in the left-right direction. The multiple pillars 17B support the ceiling frame 17A from below. The pair of reinforcing frames 17C is provided on the left and right of a front end portion of the ceiling frame 17A.

The tank unit 21 is connected to the ceiling frame 17A in a horizontal state. As illustrated in FIG. 1, the ceiling frame 17A is located higher than the roof of the cabin 16. Accordingly, the tank unit 21 is disposed above the roof of the cabin 16.

The reinforcing frames 17C are reinforcing diagonal members inclined downward from the front end portion of the ceiling frame 17A to the front frame 32. Therefore, the rigidity in the front-rear direction of the installation frame 17 is enhanced as compared with the case where the ceiling frame 17A and the tank unit 21 are supported only by the pillars 17B.

The chassis 41 of the work vehicle 1 is provided with a support frame 37 for causing the vehicle body 11 to support the battery unit 30.

Specifically, the motor 31 is mounted on the front frame 32 of the chassis 41, and the support frame 37 is attached to a portion of the front frame 32 corresponding to the motor 31. The support frame 37 is made of, for example, a metal frame member, and is attached in a cantilevered state so as to protrude rightward from the front frame 32.

The transmission case 33 located behind the motor 31 has a power transmission mechanism therein. The power transmission mechanism includes a transmission, a clutch, and a differential gear, and decelerates or accelerates the rotation of the output shaft of the motor 31 to transmit the rotation to the traveling device 12.

In addition, the power transmission mechanism includes a branch mechanism that outputs a part of the power of the motor 31 to a PTO shaft (not illustrated). The PTO shaft is an output shaft protruding rearward from the transmission case 33.

A coupling device 44 (see FIG. 1) configured by, for example, a three-point link mechanism for coupling a working device for performing desired farmwork to the rear of the vehicle body 11 is attached to the transmission case 33.

### [Discharge Pipe]

As illustrated in FIG. 1 and FIG. 2, the work vehicle 1 of the present embodiment includes a discharge pipe 50.

The discharge pipe 50 has a function of discharging a discharge from the FC module 24 to the outside of the vehicle body 11.

The discharge from the FC module 24 includes unreacted air (oxygen), unreacted hydrogen, and drainage water generated by an electrochemical reaction.

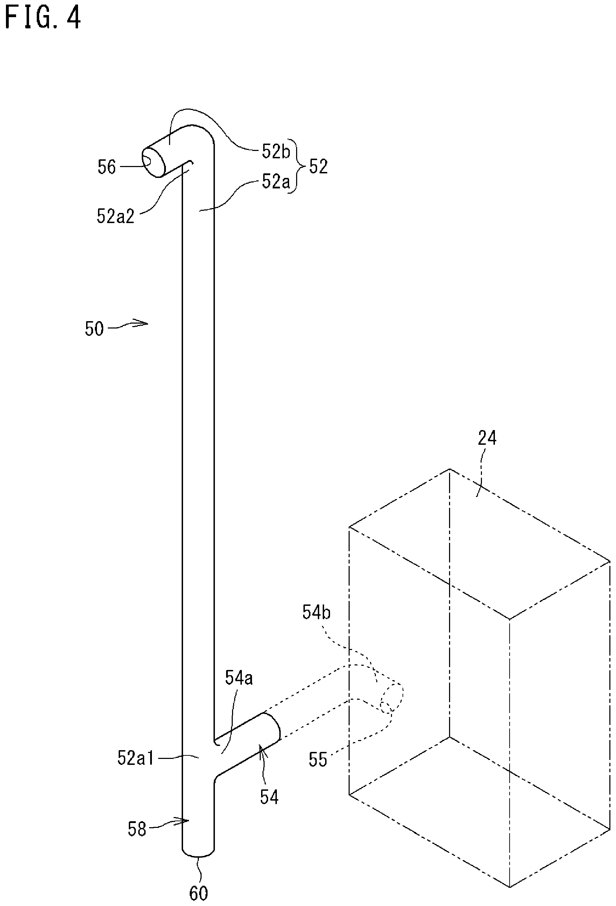

FIG. 4 is a perspective view illustrating the discharge pipe 50.

The discharge pipe 50 extends from the FC module 24 mounted inside the hood 34 (vehicle body 11) to the outside of the vehicle body 11. The discharge pipe 50 is formed using a metal pipe made of stainless steel, aluminum alloy, or the like.

The discharge pipe 50 includes a standing pipe 52, an external pipe 54, and a discharge port 56.

The standing pipe 52 is provided on the right lateral side of the vehicle body 11 (hood 34) (see FIG. 1 and FIG. 2). The standing pipe 52 extends along the up-down direction. The standing pipe 52 is fixed to, for example, the pillar 17B located on the right front side of the cabin 16.

The discharge port 56 is provided at the upper end of the standing pipe 52. The discharge port 56 is an opening for discharging a discharge (drainage water) from the FC module 24 to the outside.

In addition, the standing pipe 52 guides the discharge (drainage water) upward, and discharges the guided discharge (drainage water) from the discharge port 56.

The external pipe 54 connects the standing pipe 52 and the FC module 24. The external pipe 54 extends from the right side surface of the vehicle body 11 (hood 34) to the outside of the vehicle body 11 (see FIG. 2). The external pipe 54 has an external tip 54a and an internal tip 54b.

The external tip 54a is exposed to the outside of the vehicle body 11. The internal tip 54b is located inside the vehicle body 11.

The internal tip 54b is connected to the FC module 24. The internal tip 54b has a feed port 55. Discharge from the FC module 24 is introduced into the feed port 55.

The external tip 54a is connected to the lower end of the standing pipe 52.

The standing pipe 52 includes a standing pipe main body 52a and an upper pipe 52b.

The standing pipe main body 52a is a portion extending along the up-down direction from the external tip 54a of the external pipe 54. The standing pipe main body 52a has a lower end portion 52a1 and an upper end portion 52a2.

The external tip 54a is connected to a side surface of the lower end portion 52a1.

The upper pipe 52b is provided at the upper end portion 52a2. The upper pipe 52b extends in the horizontal direction from the upper end portion 52a2. In addition, the upper pipe 52b extends in a direction away from the vehicle body 11. More specifically, it extends rightward as viewed from the vehicle body 11. Thus, the upper pipe 52b extends in a direction opposite to the vehicle body 11.

The discharge port 56 is provided at an end of the upper pipe 52b. The discharge port 56 is located at substantially the same height as the roof of the cabin 16. Accordingly, the discharge port 56 is located above the upper surface of the hood 34.

A discharge introduced from the feed port 55 passes through the standing pipe 52 from the external pipe 54 and is discharged from the discharge port 56. As described above, the discharge includes drainage water. Note that, the drainage water mentioned here includes water (liquid) in addition to water vapor.

The discharge port 56 of the present embodiment has substantially the same height as the roof of the cabin 16. Thus, the discharge port 56 is disposed above the eye level of an occupant of the driver's seat 15.

Further, the standing pipe 52 is provided on the right side of the hood 34.

Therefore, even if drainage water (water vapor) appears like white smoke from the discharge port 56, it is possible to inhibit the water vapor from obstructing the view of the occupant or fogging the window of the cabin 16, and thus possible to inhibit visibility from being lowered due to the water vapor.

In addition, since the discharge pipe 50 of the present embodiment has the upper pipe 52b and the discharge port 56 is provided in the upper pipe 52b, the direction of drainage water (water vapor) discharged from the discharge port 56 can be set to the horizontal direction. As a result, it is possible to direct the water vapor to a direction away from the vehicle body 11, and thus possible to effectively inhibit visibility from being lowered due to the water vapor.

Note that, the upper pipe 52b may extend horizontally from a middle portion of the standing pipe main body 52a. Also in this case, it is possible to effectively inhibit visibility from being lowered due to water vapor. The middle portion of the standing pipe main body 52a is a portion between the upper end portion 52a2 and the lower end portion 52a1 of the standing pipe main body 52a.

Further, the discharge pipe 50 of the present embodiment has a lower pipe 58.

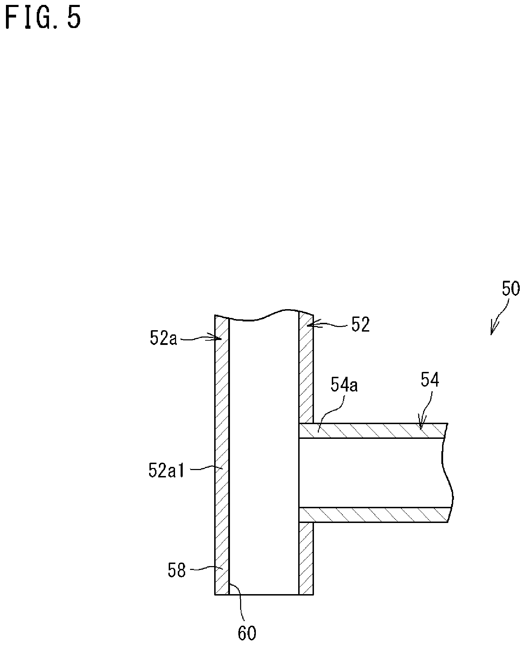

FIG. 5 is an enlarged cross-sectional view of a portion of the lower pipe 58 of the discharge pipe 50.

The lower pipe 58 is connected to the lower end portion 52a1 of the standing pipe main body 52a. The lower pipe 58 extends downward so as to extend from the lower end portion 52a1. Thus, the standing pipe 52, the external pipe 54, and the lower pipe 58 connected to each other have a T-shape.

An external discharge port 60 is provided at a lower end of the lower pipe 58. The external discharge port 60 is an opening for discharging drainage water to the outside separately from the discharge port 56.

Thus, the discharge pipe 50 has three openings. The three openings, that is, the feed port 55, the discharge port 56, and the external discharge port 60 communicate with each other.

Water vapor in the drainage water is mainly discharged from the discharge port 56. On the other hand, water (liquid) in the drainage water is discharged from the external discharge port 60.

The water vapor is cooled when passing through the discharge pipe 50. At this time, the water vapor condenses, and water (liquid) is generated in the discharge pipe 50.

The external discharge port 60 discharges, to the outside, the water in the discharge pipe 50 generated by condensation of the water vapor.

As described above, in the present embodiment, since the discharge pipe 50 has the external discharge port 60, water in the discharge pipe 50 generated by condensation of water vapor can be discharged from the external discharge port 60, thus making it possible to inhibit water from being stored in the discharge pipe 50.

Further, in the present embodiment, since the external discharge port 60 is provided in the lower pipe 58, it is possible to guide water to be discharged downward while inhibiting the water to be discharged from being transmitted to the other portion of the discharge pipe 50. Furthermore, it is possible to discharge the water to be discharged while guiding it to a position that does not affect the vehicle body 11 and the periphery of the vehicle body 11.

### [Other Embodiments]

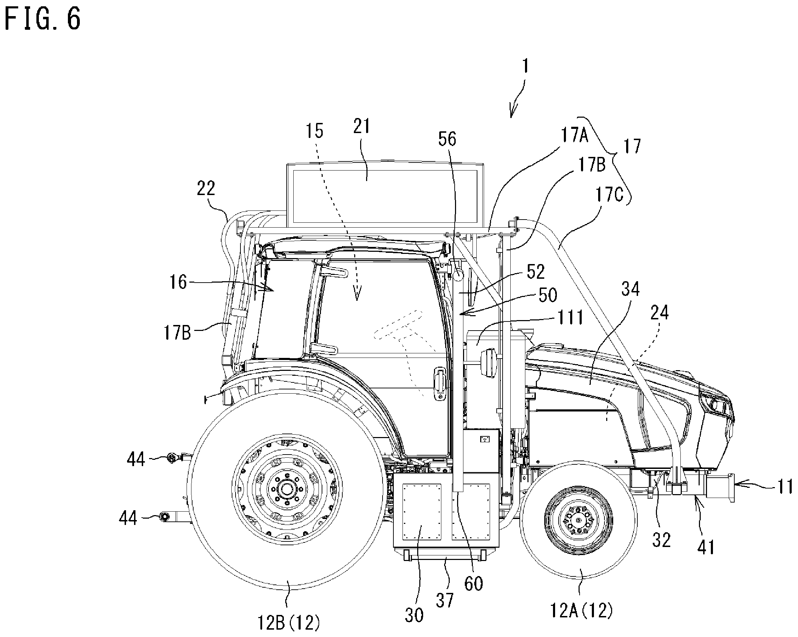

FIG. 6 is a right side view illustrating an entire work vehicle 1 according to Embodiment 2.

The work vehicle 1 of the present embodiment is different from that of Embodiment 1 in that the standing pipe 52 of the discharge pipe 50 is provided on the side of the cabin 16.

The standing pipe 52 of the present embodiment is provided on the side of a right front portion of the cabin 16.

Also in this case, since the discharge port 56 is located on the right side of the cabin 16, even if water vapor appears like white smoke from the discharge port 56, it is possible to inhibit the water vapor from obstructing the view of the occupant or fogging the window of the cabin 16, and thus possible to inhibit visibility from being lowered due to the water vapor.

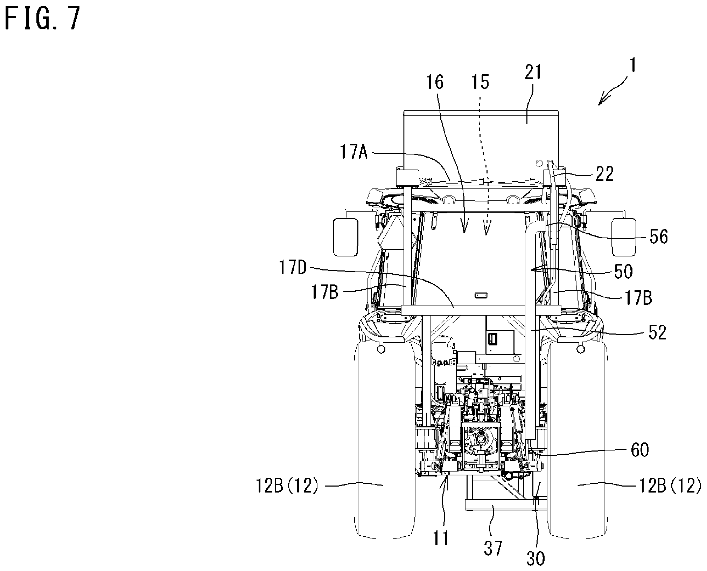

FIG. 7 is a rear view of the work vehicle 1 according to Embodiment 3.

The work vehicle 1 of the present embodiment is different from that of Embodiment 1 in that the standing pipe 52 of the discharge pipe 50 is provided behind the cabin 16.

The standing pipe 52 of the present embodiment is fixed to, for example, a beam portion 17D. The beam portion 17D is a member connecting the lower ends of a pair of pillars 17B located behind the cabin 16.

In the present embodiment, since the standing pipe 52 is provided behind the cabin 16, the discharge port 56 is located behind the cabin 16. Therefore, even if water vapor appears like white smoke from the discharge port 56, it is possible to inhibit the water vapor from obstructing the view of the occupant or fogging the window of the cabin 16, and thus possible to inhibit visibility from being lowered due to the water vapor.

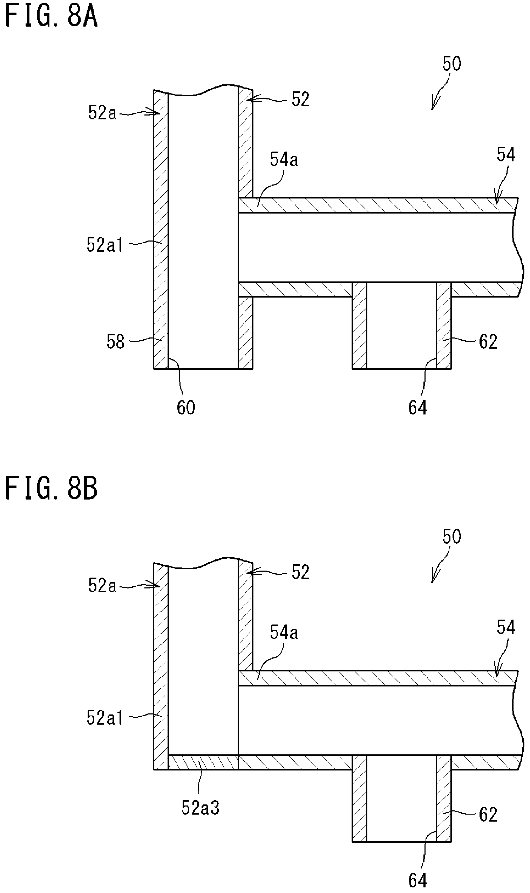

FIG. 8A is a partial cross-sectional view of the discharge pipe 50 according to Embodiment 4.

The discharge pipe 50 of the present embodiment is different from that of Embodiment 1 in that a lower pipe 62 is connected to the external pipe 54.

The lower pipe 62 extends downward from the external pipe 54. The height position of an end of the lower pipe 62 is substantially the same as the height position of an end of the lower pipe 58.

An external discharge port 64 is provided at a lower end of the lower pipe 62.

Thus, the discharge pipe 50 has four openings. The four openings, that is, the feed port 55, the discharge port 56, the external discharge port 60, and the external discharge port 64 communicate with each other.

In the present embodiment, water generated by condensation of water vapor is discharged from either the external discharge port 60 or the external discharge port 64 located upstream of the external discharge port 60. Therefore, water that cannot be discharged by the external discharge port 64 on the upstream side can be discharged by the external discharge port 60. As a result, it is possible to effectively inhibit water from being stored in the discharge pipe 50.

FIG. 8B is a partial cross-sectional view of the discharge pipe 50 according to a modified example of Embodiment 4.

The discharge pipe 50 of the present modification is different from that of Embodiment 4 in that the lower pipe 58 and the external discharge port 60 are not provided.

An end surface of the lower end portion 52a1 of the standing pipe main body 52a is closed by a lid member 52a3.

Also in this case, water generated by condensation of water vapor is discharged from the external discharge port 64.

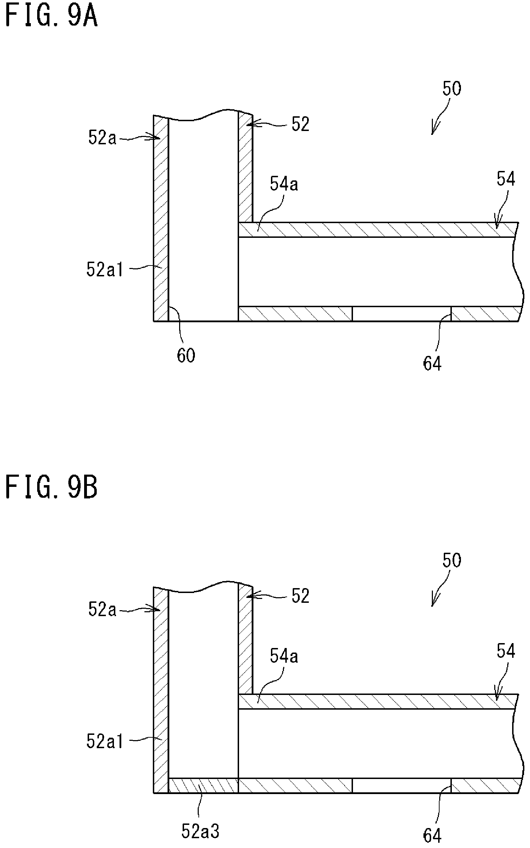

FIG. 9A is a partial cross-sectional view of the discharge pipe 50 according to Embodiment 5.

The discharge pipe 50 of the present embodiment is different from that of Embodiment 1 in that the external discharge port 60 is provided in the lower end portion 52a1 of the standing pipe main body 52a, and the external discharge port 64 is provided in the external pipe 54.

The discharge pipe 50 of the present embodiment does not have the lower pipe 58, and the external discharge port 60 is provided in the standing pipe 52. Thus, the standing pipe 52 and the external pipe 54 connected to each other have an L-shape.

Also in the present embodiment, water generated by condensation of water vapor is discharged from either the external discharge port 60 or the external discharge port 64 located upstream of the external discharge port 60. As a result, it is possible to effectively inhibit water from being stored in the discharge pipe 50.

Note that, although the lower pipe is not provided in the present embodiment, the lower pipe 58 may be provided only at the lower end portion 52a1 of the standing pipe main body 52a, and the external discharge port 60 may be provided at the end of the lower pipe 58. Instead, the lower pipe 58 may be provided only at the external pipe 54, and the external discharge port 64 may be provided at the end of the lower pipe 62.

FIG. 9B is a partial cross-sectional view of the discharge pipe 50 according to a modified example of Embodiment 5.

The discharge pipe 50 of the present modification is different from that of Embodiment 5 in that the external discharge port 60 is not provided.

An end surface of the lower end portion 52a1 of the standing pipe main body 52a is closed by a lid member 52a3.

Also in this case, water generated by condensation of water vapor is discharged from the external discharge port 64.

### [Others]

It should be understood that the embodiments disclosed herein are illustrative in all respects and are not restrictive.

For example, in each of the above embodiments, the case where the external discharge ports 60 and 64 are provided in the discharge pipe 50 has been exemplified. However, the external discharge ports 60 and 64 do not necessarily have to be provided. In this case, a discharge introduced from the feed port 55 is discharged only from the discharge port 56.

Further, in each of the above embodiments, the case where the external discharge ports 60 and 64 are provided at the lowermost portion of the discharge pipe 50 has been exemplified. However, the external discharge ports 60 and 64 have only to be provided below the discharge port 56.

The scope of the present invention is defined not by the above meaning but by the claims, and is intended to include meanings equivalent to the claims and all modifications within their scope.

### REFERENCE SIGNS LIST

- 1: work vehicle
- 11: vehicle body
- 12: traveling device
- 12A: front wheel
- 12B: rear wheel
- 15: driver's seat
- 16: cabin
- 17: installation frame
- 17A: ceiling frame
- 17B: pillar
- 17C: reinforcing frame
- 17D: beam portion
- 21: tank unit
- 22: pipe
- 24: FC module
- 30: battery unit
- 31: electric motor
- 32: front frame
- 33: transmission case
- 34: hood
- 37: support frame
- 41: chassis
- 44: coupling device
- 50: discharge pipe
- 52: standing pipe
- 52a: standing pipe main body
- 52a1: lower end portion
- 52a2: upper end portion
- 52a3: lid member
- 52b: upper pipe
- 54: external pipe
- 54a: external tip
- 54b: internal tip
- 55: feed port
- 56: discharge port
- 58: lower pipe
- 60: external discharge port
- 62: lower pipe
- 64: external discharge port
- 111: cover

## Claims

1. A work vehicle comprising:
a fuel cell;
a vehicle body on which the fuel cell is mounted; and
a discharge pipe having a discharge port for discharging drainage water from the fuel cell to an outside, wherein
the discharge pipe includes a standing pipe that guides the drainage water upward and discharges the guided drainage water from the discharge port.

2. The work vehicle according to claim 1, wherein
the discharge pipe further includes an external pipe extending from the vehicle body to the outside and connected to the standing pipe.

3. The work vehicle according to claim 2, wherein
the standing pipe includes an upper pipe extending in a horizontal direction from any of an upper end and a middle portion thereof, and
the discharge port is provided in the upper pipe.

4. The work vehicle according to claim 3, wherein
the upper pipe extends in a direction away from the vehicle body.

5. The work vehicle according to claim 1, wherein
the discharge pipe further includes an external discharge port that is provided in the standing pipe and discharges the drainage water to the outside separately from the discharge port, and
the external discharge port is located below the discharge port.

6. The work vehicle according to claim 2, wherein
the discharge pipe further includes an external discharge port that is provided in the external pipe and discharges the drainage water to the outside separately from the discharge port, and
the external discharge port is located below the discharge port.

7. The work vehicle according to claim 1, wherein
the discharge pipe further includes a lower pipe connected to the standing pipe, and
the lower pipe includes an external discharge port that discharges the drainage water to the outside separately from the discharge port.

8. The work vehicle according to claim 2, wherein
the discharge pipe further includes a lower pipe connected to the external pipe, and
the lower pipe includes an external discharge port that discharges the drainage water to the outside separately from the discharge port.

9. The work vehicle according to any one of claims 1 to 8, wherein
the vehicle body includes:
a cabin surrounding a driver's seat behind the fuel cell; and
a hood covering the fuel cell, wherein
the standing pipe is provided on a side of the hood.

10. The work vehicle according to any one of claims 1 to 8, wherein
the vehicle body includes a cabin surrounding a driver's seat behind the fuel cell, and
the standing pipe is provided on a side of the cabin.

11. The work vehicle according to any one of claims 1 to 8, wherein
the vehicle body includes a cabin surrounding a driver's seat behind the fuel cell, and
the standing pipe is provided behind the cabin.
